# EUROPEAN PATENT SPECIFICATION

(11) **EP 3 561 252 B1**
(45) Date of publication and mention of the grant of the patent: **22.09.2021**
(21) Application number: 19168070.1
(22) Date of filing: 09.04.2019
(51) Int. Cl.: F01N 13/08, F01N 3/00, B60K 13/04

(54) **SCOOTER**
MOTORROLLER
SCOOTER

(30) Priority: 24.04.2018 JP 2018083217
(43) Date of publication of application: 30.10.2019
(73) Proprietor: YAMAHA HATSUDOKI KABUSHIKI KAISHA, Iwata-shi, Shizuoka 438-8501 (JP)
(72) Inventor: MIYAKE, Takashi, Iwata-shi, Shizuoka 438-8501 (JP)
(74) Representative: Grünecker Patent- und Rechtsanwälte PartG mbB

(56) References cited:
- EP-A1- 3 015 350
- EP-A1- 3 165 437
- WO-A1-2016/002957
- WO-A1-2018/030110

## Description

The present invention relates to a scooter. Prior art document EP 3 165 437 A1 discloses a scooter having a vehicle body frame, a front wheel, a foot board at least partially disposed rearward of the front wheel, the foot board being supported by the vehicle body frame, an under cover at least partially disposed below the foot board and rearward of the front wheel and a swing supporter disposed on the vehicle body frame. The swing supporter is provided with a first pivot shaft and a second pivot shaft. An engine unit is at least partially disposed below the foot board. The engine unit is swingably supported by the swing supporter. The engine unit has a crankcase, a cylinder body connected to the crankcase, and an exhaust port configured to emit exhaust gas, and includes a cylinder head connected to the cylinder body. A first exhaust pipe is connected to the exhaust port of the cylinder head. A second exhaust pipe is disposed downstream of the first exhaust pipe in a flow direction of an exhaust gas. A catalyst is disposed between the first exhaust pipe and the second exhaust pipe and below the engine unit. A silencer is connected to the second exhaust pipe and disposed rearward of the second exhaust pipe. An oxygen sensor is attached to a portion of the first exhaust pipe closer to the catalyst than an intermediate position of the first exhaust pipe, and the oxygen sensor including a portion located inside the first exhaust pipe and a portion located outside the first exhaust pipe. The portion of the oxygen sensor located outside the first exhaust pipe is disposed above a lower end of the first exhaust pipe. The catalyst is separated from the engine unit in a vehicle bottom view. The oxygen sensor and the under cover do not overlap each other in a vehicle bottom view, and overlap each other in a vehicle front view. The oxygen sensor is disposed above the swing supporter and the oxygen sensor is arranged forward of the cylinder body.

A scooter known to date includes a swing type engine unit and an oxygen sensor for detecting an air-fuel ratio of an exhaust gas. Such a scooter is disclosed in, for example, JP2011-157891A. An oxygen sensor disclosed in JP2011-157891A is attached to a portion of an exhaust pipe near an exhaust port of an engine unit. The exhaust pipe swings upward and downward integrally with the engine unit.

Another known scooter includes an exhaust pipe connected to an exhaust port of a swing type engine unit and a silencer disposed rearward of the exhaust port, and a portion of the exhaust pipe is disposed below the engine unit. In yet another scooter, a catalyst is disposed in a middle portion of an exhaust pipe disposed below an engine unit. In the case where the catalyst is disposed in a middle portion of the exhaust pipe, the catalyst is located closer to the exhaust port than in a case where the catalyst is disposed inside the silencer downstream of the exhaust pipe. Accordingly, the catalyst can be warmed quickly by the exhaust gas at start-up of the engine unit. Since the catalyst can be activated early, the exhaust gas can be sufficiently purified at the start-up.

A catalyst offers its performance while the air-fuel ratio of an exhaust gas is within a predetermined range. To allow the catalyst to offer its performance sufficiently, an oxygen sensor needs to detect an oxygen concentration of the exhaust gas accurately. For the accurate detection, the oxygen sensor is preferably disposed near the catalyst.

In a scooter in which a catalyst is disposed below a swing type engine unit, to dispose an oxygen sensor near the catalyst, the oxygen sensor has to be disposed below the engine unit. In the scooter, pebbles on the road thrown by the front wheel (hereinafter referred to as stone chips) might fly toward the bottom of an engine unit. It is, therefore, necessary to prevent stone chips from hitting the oxygen sensor.

To prevent the hitting, it is conceivable to provide a dedicated cover for protecting the oxygen sensor below the oxygen sensor. In this case, however, the cover needs to be disposed at a higher level than the lowest level of the scooter from the ground, and the engine unit and the seat need to be disposed at higher levels accordingly. This causes the problem of an increased in size of the vehicle. In particular, the swing type engine unit swings upward and downward upon acceleration or deceleration of the scooter or with unevenness of the road surface. Thus, to keep the lowest level from the ground when the engine unit swings downward, the cover has to be disposed at a higher level, which causes the problem of a further increased size of the vehicle.

It is therefore an object of the present invention to provide a scooter including a swing type engine unit and a catalyst disposed below the engine unit, and capable of accurately detecting an oxygen concentration of an exhaust gas near the catalyst, reducing hitting of stone chips against an oxygen sensor, and suppressing an increase in size of a vehicle. According to the present invention said object is solved by a scooter having the features of independent claim 1. Preferred embodiments are laid down in the dependent claims.

In a scooter disclosed herein, the catalyst is disposed between the first exhaust pipe and the second exhaust pipe and is disposed upstream of the silencer in a flow direction of an exhaust gas. Accordingly, the distance between the catalyst and the exhaust port is relatively short, and an exhaust gas at start-up can be sufficiently purified. The oxygen sensor is attached to a portion of the first exhaust pipe closer to the catalyst than the intermediate position of the first exhaust pipe. Thus, the distance between the oxygen sensor and the catalyst is short, and an oxygen concentration of an exhaust gas near the catalyst can be accurately detected.

Since the oxygen sensor is disposed rearward of the front wheel, stone chips thrown by the front wheel might hit the oxygen sensor. The oxygen sensor, however, is disposed rearward of the pivot shaft and rearward of the cylinder body. The influence of stone chips increases toward the front wheel and decreases away from the front wheel. Since the oxygen sensor is disposed away from the front wheel, the influence of stone chips can be reduced. In acceleration, the amount of stone chips from the front wheel might increase, but the oxygen sensor is located rearward of the pivot shaft supporting the swing type engine unit. Since the engine unit swings upward in acceleration, the oxygen sensor moves upward, and stone chips are less likely to hit the oxygen sensor. Thus, advantages of the swing type engine unit can be effectively utilized, and even in acceleration, the influence of stone chips on the oxygen sensor can be reduced. The portion of the oxygen sensor located outside the first exhaust pipe is disposed above the lower end of the first exhaust pipe. Accordingly, stone chips are less likely to hit the oxygen sensor. In addition, the oxygen sensor and the under cover overlap each other in a vehicle front view. In other words, the front of the oxygen sensor is covered with the under cover. Thus, the under cover can prevent stone chips thrown from the front from hitting the oxygen sensor. Since the oxygen sensor does not overlap the under cover in a vehicle bottom view, maintenance of the oxygen sensor can be easily performed.

In the manner described above, stone chips are less likely to hit the oxygen sensor, and thus, it is unnecessary to dispose a dedicated cover for protecting the oxygen sensor below the oxygen sensor. Since such a cover is unnecessary, the lowest level from the ground can be kept without an increase in the vehicle size. Accordingly, an increase in the vehicle size can be suppressed.

As described above, the scooter includes the swing type engine unit and the catalyst disposed below the engine unit and is capable of accurately detecting an oxygen concentration of an exhaust gas near the catalyst, inhibiting hitting of stone chips against an oxygen sensor, and suppressing an increase in the vehicle size.

In a preferred aspect, in a cross section including a central line of the oxygen sensor and perpendicular to a central line of the first exhaust pipe, the portion of the oxygen sensor located outside the first exhaust pipe is disposed outward of the central line of the first exhaust pipe in a vehicle width direction and above a lower end of the first exhaust pipe.

In the aspect, maintenance of the oxygen sensor is easily performed.

According to the invention, the oxygen sensor is exposed in a vehicle side view.

In the aspect, maintenance of the oxygen sensor from a side can be easily performed.

In a preferred aspect, the scooter includes an electric wire connected to the oxygen sensor, and a portion of the electric wire is exposed in a vehicle side view.

In the aspect, the electric wire can be easily handled from a side. Accordingly, maintenance of the oxygen sensor can be performed easily.

In a preferred aspect, the scooter includes: a catalyst case accommodating the catalyst therein; and a first pipe fitting having a first opening portion connected to the first exhaust pipe and a second opening portion connected to the catalyst case and disposed between the first exhaust pipe and the catalyst case. A central line of the first opening portion and a central line of the second opening portion are shifted from each other.

In the aspect, since the flow direction of an exhaust gas is changed by the first pipe fitting, the exhaust gas is likely to be mixed before the catalyst case. Accordingly, the catalyst can be caused to uniformly contact the catalyst.

According to the invention, the oxygen sensor overlaps the crankcase in a vehicle bottom view.

In the aspect, it is possible to prevent the oxygen sensor from projecting more outwardly than the crankcase in the vehicle width direction so that an increase in the vehicle size can be suppressed.

In a preferred aspect, the first exhaust pipe has a slant portion extending rearward and outward in a vehicle width direction in a vehicle bottom view. The oxygen sensor is attached to the slant portion.

In the aspect, the electric wire connected to the oxygen sensor can be easily drawn outward in the vehicle width direction. Accordingly, maintenance of the oxygen sensor can be performed easily.

In a preferred aspect, at least a portion of the oxygen sensor is disposed at a right of a left end of the front wheel and at a left of a right end of the front wheel in a vehicle bottom view.

In the aspect, the oxygen sensor is disposed near the center of the scooter.

In a preferred aspect, the scooter includes a rear wheel disposed rearward of the crankcase, and the crankcase is disposed forward of the rear wheel.

In the aspect, the rear wheel is less likely to hinder placement of the catalyst. Accordingly, the catalyst can be easily disposed.

In a preferred aspect, at least a portion of the oxygen sensor is disposed above a lower end of the catalyst and below an upper end of the catalyst.

In a preferred aspect, the oxygen sensor is disposed inward of the catalyst in a vehicle width direction.

The present teaching provides a scooter including a swing type engine unit and a catalyst disposed below the engine unit and capable of accurately detecting an oxygen concentration of an exhaust gas near the catalyst, hindering hitting of stone chips against the oxygen sensor, and suppressing an increase in the vehicle size.

### BRIEF DESCRIPTION OF THE DRAWINGS

FIG. 1 is a right side view of a scooter according to a preferred embodiment.
FIG. 2 is a right side view of the scooter when a front cover and a side cover, for example, are detached.
FIG. 3 is a bottom view of the scooter.
FIG. 4 is a partial plan view of the scooter.
FIG. 5 is a partial front view of the scooter.
FIG. 6 is a partial bottom view of the scooter.
FIG. 7 is a partial right side view of the scooter.
FIG. 8 is a cross-sectional view of a first oxygen sensor and a first exhaust pipe and illustrates a cross section including a central line of the first oxygen sensor and perpendicular to a central line of the first exhaust pipe.
FIG. 9A is a partial front view of the scooter.
FIG. 9B is a partially cut-out view illustrating a front cover and corresponding to FIG. 9A.

### DETAILED DESCRIPTION OF THE PREFERRED EMBODIMENTS

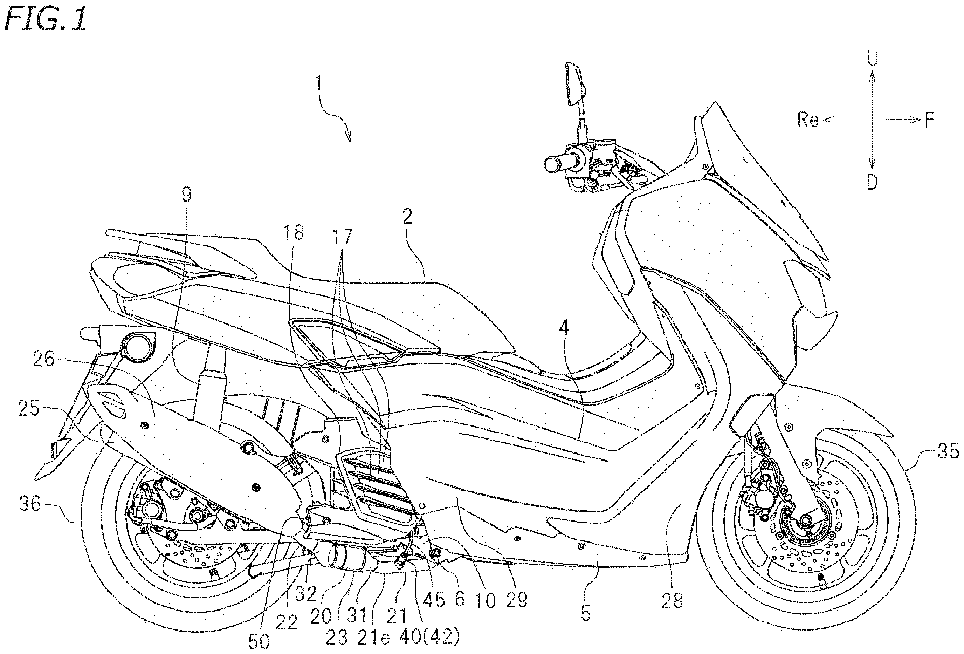

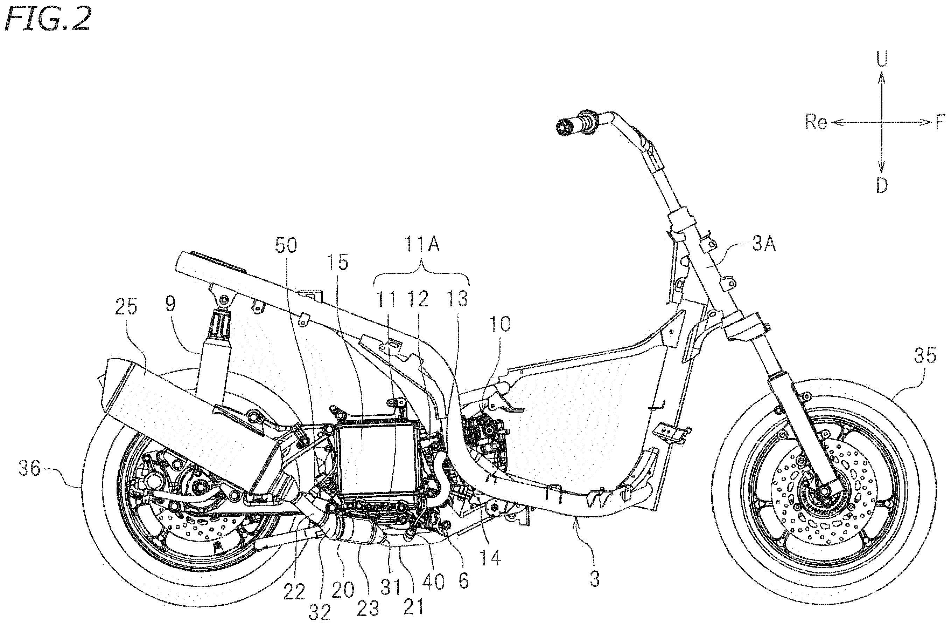

A preferred embodiment of the present teaching will be described hereinafter with reference to the drawings. FIG. 1 is a side view of a scooter 1 according to the preferred embodiment. FIG. 2 is a side view of the scooter 1 when a front cover 28 and a side cover 29 described later are detached. As illustrated in FIG. 2, the scooter 1 includes a swing type engine unit 10 and a catalyst 20 disposed below the engine unit 10.

As illustrated in FIG. 1, the scooter 1 includes a seat 2 on which a rider is seated. Unless otherwise specified, the terms front, rear, left, right, up, and down as used in the description below, refer to front, rear, left, right, up, and down, respectively, as seen from an imaginary rider sitting on the seat 2 in a case where the scooter 1 on which the rider is not seated and a load is not mounted and which is not filled with fuel is stationary in an upright position on a horizontal surface. The reference characters F, Re, L, R, U, and D in the drawings represent front, rear, left, right, up, and down, respectively.

As illustrated in FIGS. 1 and 2, the scooter 1 includes a vehicle body frame 3, a front wheel 35, a rear wheel 36, a foot board 4, and a pivot shaft 6 provided on the vehicle body frame 3. The foot board 4 is supported by the vehicle body frame 3, and at least a portion of the foot board 4 is disposed rearward of the front wheel 35. The scooter 1 also includes a front cover 28 at least partially located below a head pipe 3A of the vehicle body frame 3, the side cover 29 disposed outside the vehicle body frame 3 in a vehicle width direction, and an under cover 5 disposed below the front cover 28 and the side cover 29. At least a portion of the under cover 5 is disposed below the foot board 4 and rearward of the front wheel 35. The engine unit 10 is swingably supported by the pivot shaft 6, and at least a portion of the engine unit 10 is disposed below the foot board 4.

As illustrated in FIG. 2, the engine unit 10 includes an internal combustion engine 11A, and the internal combustion engine 11A includes a crankcase 11, a cylinder body 12 connected to the crankcase 11, and a cylinder head 13 connected to the cylinder body 12. Although not shown, a crank shaft of the internal combustion engine 11A is disposed inside the crankcase 11. The cylinder body 12 is disposed ahead of the crankcase 11, and the cylinder head 13 is disposed ahead of the cylinder body 12. The cylinder head 13 includes an exhaust port 14 from which an exhaust gas is exhausted.

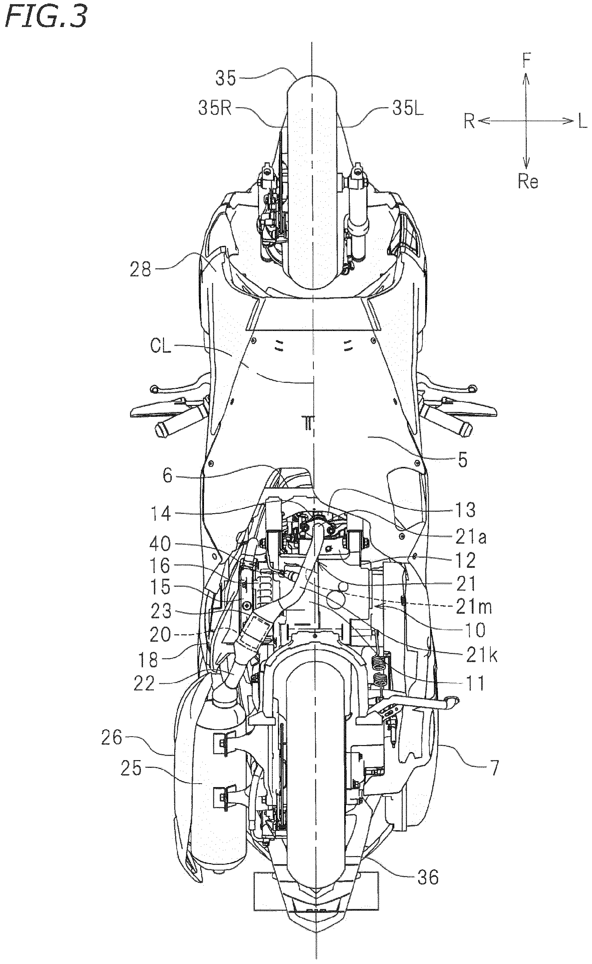

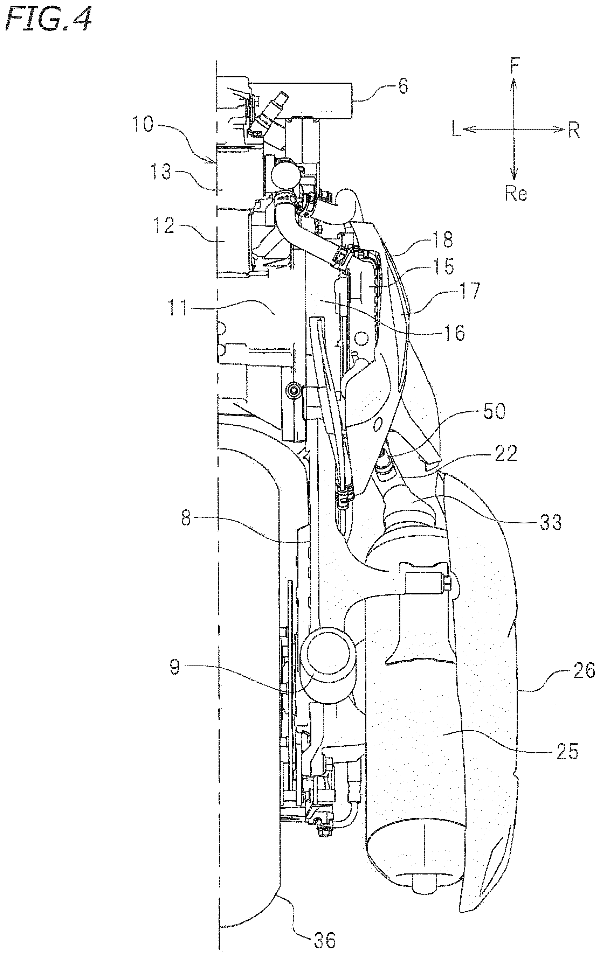

The engine unit 10 includes a transmission case 7 (see FIG. 3) disposed at the left of the rear wheel 36, and an unillustrated belt continuously variable transmission (hereinafter referred to as a CVT) disposed inside the transmission case 7. The CVT is coupled to the crank shaft of the internal combustion engine 11A and the rear wheel 36, and transfers a torque of the crank shaft to the rear wheel 36 so that a transmission gear ratio is changeable. As illustrated in FIG. 4, a rear arm 8 coupling the crankcase 11 and the rear wheel 36 to each other is disposed at the right of the rear wheel 36. The rear wheel 36 is supported by the engine unit 10 and the rear arm 8, and swings together with the engine unit 10 and the rear arm 8. A rear cushion unit 9 is disposed between the vehicle body frame 3 and the rear arm 8 (see FIG. 2). When the engine unit 10 swings upward, the rear cushion unit 9 contracts, whereas when the engine unit 10 swings downward, the rear cushion unit 9 extends.

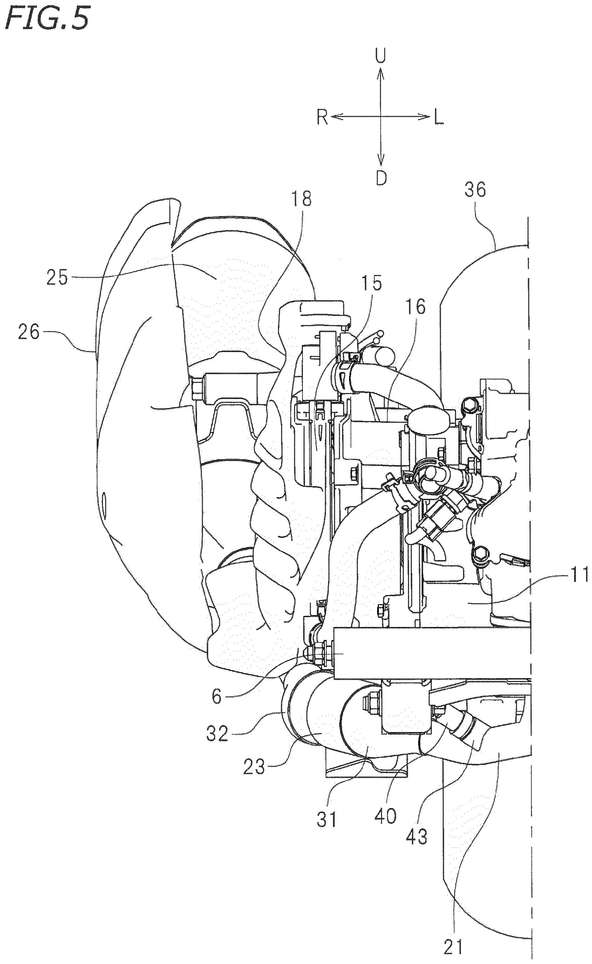

In this preferred embodiment, the internal combustion engine 11A of the engine unit 10 is of a water-cooled type. As illustrated in FIGS. 4 and 5, a fan 16 is disposed at the right of the crankcase 11, and a radiator 15 is disposed at the right of the fan 16. As illustrated in FIG. 1, a fan cover 18 having a plurality of openings 17 is disposed at the right of the radiator 15. When the fan 16 rotates, air is supplied to the radiator 15 through the openings 17 of the fan cover 18. The fan 16, the radiator 15, and the fan cover 18 are supported by the crankcase 11, and thus, swing integrally with the engine unit 10. The internal combustion engine 11A of the engine unit 10 is not necessarily of a water-cooled type. The internal combustion engine 11A may be of an air-cooled type, and the radiator 15 may not be provided.

As illustrated in FIG. 1, the scooter 1 includes a first exhaust pipe 21, a catalyst case 23 accommodating the catalyst 20, a second exhaust pipe 22, and a silencer 25. A silencer cover 26 is disposed at a side of the silencer 25. The first exhaust pipe 21, the catalyst case 23, the second exhaust pipe 22, the silencer 25, and the silencer cover 26 are configured to swing integrally with the engine unit 10.

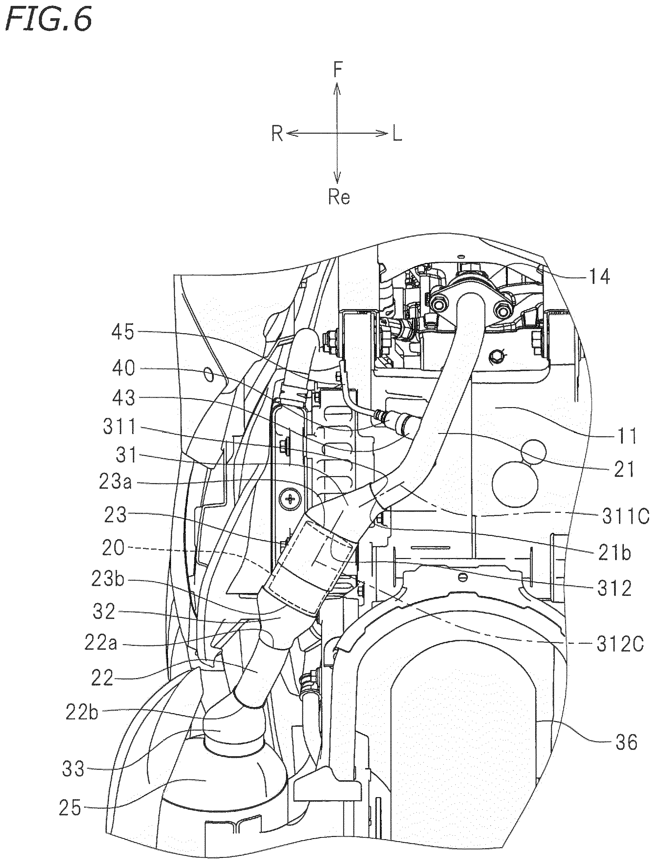

As illustrated in FIG. 3, an upstream end portion 21a of the first exhaust pipe 21 is connected to the exhaust port 14 of the cylinder head 13. As illustrated in FIG. 6, a downstream end portion 21b of the first exhaust pipe 21 and an upstream end portion 23a of the catalyst case 23 are connected to each other by a first pipe fitting 31. A downstream end portion 23b of the catalyst case 23 and an upstream end portion 22a of the second exhaust pipe 22 are connected to each other by a second pipe fitting 32. A downstream end portion 22b of the second exhaust pipe 22 and the silencer 25 are connected to each other by a third pipe fitting 33.

The first exhaust pipe 21 is a metal pipe. The first exhaust pipe 21 is disposed below the engine unit 10. As illustrated in FIG. 3, in a vehicle bottom view, the first exhaust pipe 21 overlaps the engine unit 10. The first exhaust pipe 21 includes a slant portion 21k extending rearward and outward in the vehicle width direction in the vehicle bottom view. The slant portion 21k is tilted with respect to a vehicle central line CL in the vehicle bottom view. The expression of outward in the vehicle width direction refers to the direction away from the vehicle central line CL, and the expression of inward in the vehicle width direction refers to the direction toward the vehicle central line CL.

The second exhaust pipe 22 is also a metal pipe. The second exhaust pipe 22 extends rearward and outward in the vehicle width direction in the vehicle bottom view. As illustrated in FIG. 1, in a vehicle side view, the second exhaust pipe 22 extends rearward and upward.

The catalyst case 23 is made of a metal cylinder. The catalyst case 23, however, is not limited to a specific shape. The catalyst 20 is disposed inside the catalyst case 23. The catalyst case 23 is disposed forward of the rear wheel 36, and the catalyst 20 is disposed forward of the rear wheel 36. The catalyst case 23 has an inside diameter larger than an inside diameter of each of the first exhaust pipe 21 and the second exhaust pipe 22. The catalyst case 23 has an outside diameter larger than an outside diameter of each of the first exhaust pipe 21 or the second exhaust pipe 22. As illustrated in FIG. 3, in the vehicle bottom view, the catalyst case 23 extends rearward and outward in the vehicle width direction. As illustrated in FIG. 1, in the vehicle side view, the catalyst case 23 extends rearward. The catalyst case 23 is not limited to a specific posture in placing.

As illustrated in FIG. 6, the first pipe fitting 31 is disposed between the first exhaust pipe 21 and the catalyst case 23, and includes a first opening portion 311 connected to the downstream end portion 21b of the first exhaust pipe 21 and a second opening portion 312 connected to the upstream end portion 23a of the catalyst case 23. The first pipe fitting 31 is formed in such a manner that the inside diameter and the outside diameter thereof increase from the first opening portion 311 toward the second opening portion 312. A central line 311C of the first opening portion 311 and a central line 312C of the second opening portion 312 are shifted from each other in the first pipe fitting 31. The expression "shifted" here means that the central line 311C and the central line 312C are not on the same line. The central line 311C and the central line 312C may be parallel, but are not parallel in this example. Since the central line 311C of the first opening portion 311 and the central line 312C of the second opening portion 312 are shifted from each other, an exhaust gas is distributed in the first pipe fitting 31 while changing its direction of flow. In this preferred embodiment, the first pipe fitting 31 connects the first exhaust pipe 21 and the catalyst case 23 to each other, and changes the flow direction of an exhaust gas immediately before the catalyst 20. The shape of the first pipe fitting 31 described here is merely an example, and is not limited to a specific shape.

The second pipe fitting 32 is disposed between the catalyst case 23 and the second exhaust pipe 22. The second pipe fitting 32 is formed in such a manner that the inside diameter and the outside diameter thereof decrease toward the downstream side. The central lines of the first pipe fitting 31 and the second pipe fitting 32 may have the same length, but in this example, the central line of the first pipe fitting 31 is longer than the central line of the second pipe fitting 32.

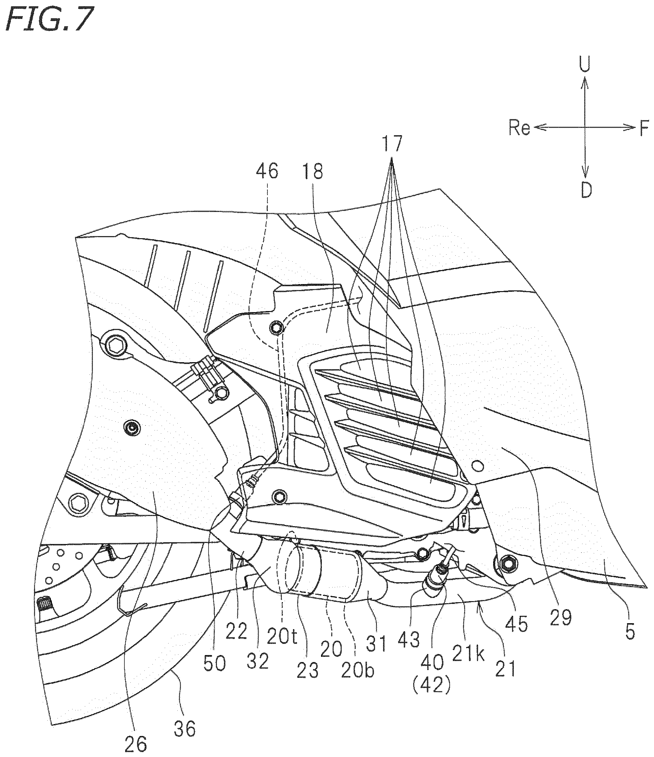

As illustrated in FIG. 7, a first oxygen sensor 40 is attached to the first exhaust pipe 21. In this example, the first oxygen sensor 40 is attached to the slant portion 21k of the first exhaust pipe 21. The first oxygen sensor 40 is disposed upstream of the catalyst 20 and detects an oxygen concentration of an exhaust gas before purification by the catalyst 20. Based on the oxygen concentration of the exhaust gas detected by the first oxygen sensor 40, an air-fuel ratio of an exhaust gas emitted from the internal combustion engine 11A can be detected. Thus, based on a detection result of the first oxygen sensor 40, the internal combustion engine 11A can be controlled to obtain a predetermined combustion state.

As illustrated in FIG. 3, the first oxygen sensor 40 is attached to a portion of the first exhaust pipe 21 closer to the catalyst 20 than an intermediate position (position indicated by a broken line in FIG. 3) 21m of the first exhaust pipe 21. The intermediate position of the first exhaust pipe 21 refers to an intermediate position between the upstream end portion 21a and the downstream end portion 21b in a direction along the central line of the first exhaust pipe 21. The first oxygen sensor 40 is disposed rearward of the cylinder body 12 of the engine unit 10. The first oxygen sensor 40 is disposed rearward of the pivot shaft 6 swingably supporting the engine unit 10.

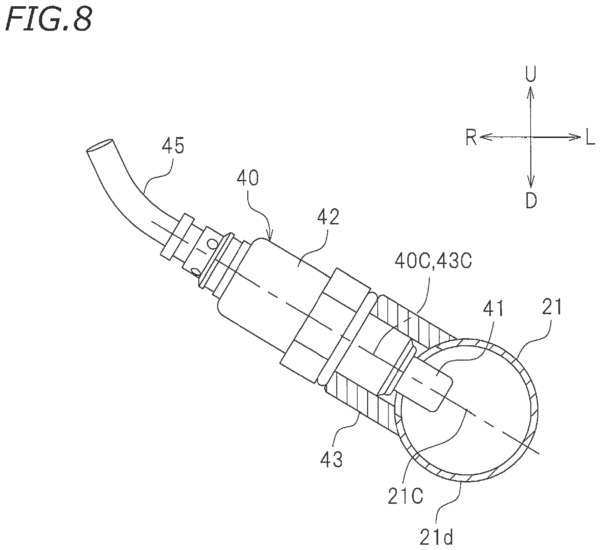

As illustrated in FIG. 7, the slant portion 21k of the first exhaust pipe 21 includes an attachment portion 43 for attaching the first oxygen sensor 40. The attachment portion 43 is cylindrical, and is welded to the slant portion 21k of the first exhaust pipe 21. The slant portion 21k of the first exhaust pipe 21 extends straight. The slant portion 21k is formed in the shape of a straight pipe. In addition, as illustrated in FIG. 8, a central line 43C of the attachment portion 43 is perpendicular to a central line 21C of the slant portion 21k of the first exhaust pipe 21. Thus, the attachment portion 43 can be provided easily as compared to a case where the slant portion 21k is curved or a case where the central line 43C of the attachment portion 43 is tilted with respect to the central line 21C of the slant portion 21k. In this example, the attachment portion 43 can be welded easily. Accordingly, in this preferred embodiment, the first oxygen sensor 40 can be easily attached to the first exhaust pipe 21.

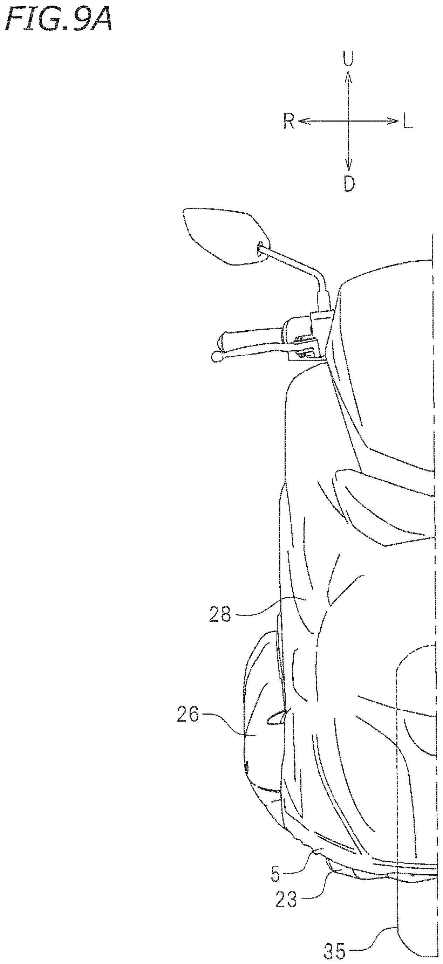

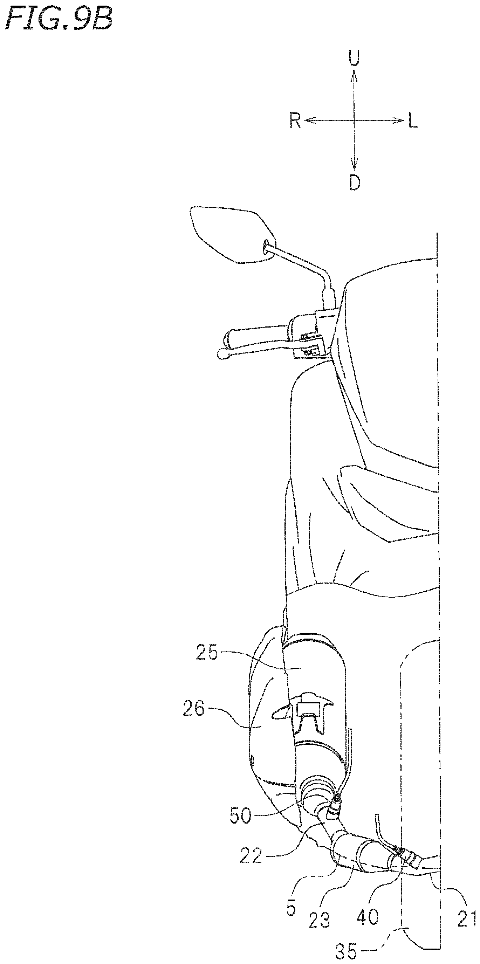

As illustrated in FIG. 1, in the vehicle side view, the first oxygen sensor 40 is not covered with the side cover 29 and is exposed. The first oxygen sensor 40 is disposed to be visually recognized when the scooter 1 is seen from the right. As illustrated in FIG. 3, in the vehicle bottom view, the first oxygen sensor 40 overlaps the crankcase 11 but does not overlap the under cover 5. In the vehicle bottom view, at least a portion of the first oxygen sensor 40 is disposed at the right of a left end 35L of the front wheel 35 and at the left of a right end 35R of the front wheel 35. The first oxygen sensor 40 is disposed near the center of the vehicle. As illustrated in FIGS. 9A and 9B, in a vehicle front view, the first oxygen sensor 40 and the under cover 5 overlap each other. The first oxygen sensor 40 is disposed not to be visually recognized when the scooter 1 is seen from the front.

As illustrated in FIG. 8, the first oxygen sensor 40 includes a sensor portion 41 located inside the first exhaust pipe 21 and a body portion 42 located outside the first exhaust pipe 21. The sensor portion 41 includes a sensor element including a material such as zirconia. As illustrated in FIG. 1, the body portion 42 is located above a lowest portion of the first exhaust pipe 21, that is, above a lower end 21e of the first exhaust pipe 21. As illustrated in FIG. 8, in a cross section including a central line 40C of the first oxygen sensor 40 and perpendicular to the central line 21C of the first exhaust pipe 21, the body portion 42 is located outward of the central line 21C of the first exhaust pipe 21 in the vehicle width direction and above the lower end 21d of the first exhaust pipe 21.

As illustrated in FIG. 7, at least a portion of the first oxygen sensor 40 is located above a lower end 20b of the catalyst 20 and below an upper end 20t of the catalyst 20. In this example, the body portion 42 of the first oxygen sensor 40 is located above the lower end 20b of the catalyst 20 and below the upper end 20t of the catalyst 20. As illustrated in FIG. 3, the first oxygen sensor 40 is disposed inward of the catalyst 20 in the vehicle width direction.

As illustrated in FIG. 7, a second oxygen sensor 50 is attached to the second exhaust pipe 22. The second oxygen sensor 50 is disposed downstream of the catalyst 20 and detects an oxygen concentration of an exhaust gas purified by the catalyst 20. If the catalyst 20 has deteriorated, the exhaust gas is not appropriately purified. Thus, based on a detection result of the second oxygen sensor 50, it can be detected whether the catalyst 20 has deteriorated or not. Deterioration of the catalyst 20 may be detected by comparing the detection result of the first oxygen sensor 40 and the detection result of the second oxygen sensor 50.

A first electric wire 45 is connected to the first oxygen sensor 40, and a second electric wire 46 is connected to the second oxygen sensor 50. As illustrated in FIG. 1, a portion of the first electric wire 45 is exposed in the vehicle side view. The portion of the first electric wire 45 is visually recognized when seen from the right. Accordingly, the first electric wire 45 can be easily handled from the right in maintenance or the like of the first oxygen sensor 40, and thus, maintenance of the first oxygen sensor 40 can be easily performed. The first electric wire 45 extends upward from the first oxygen sensor 40 and then extends forward. As illustrated in FIG. 7, the second electric wire 46 extends upward from the second oxygen sensor 50 and then extends forward. The first electric wire 45 and the second electric wire 46 do not pass under the engine unit 10. The first electric wire 45 and the second electric wire 46 are connected to an unillustrated electronic control unit (ECU).

As described above, the scooter 1 according to this preferred embodiment includes the swing type engine unit 10 and the catalyst 20 disposed below the engine unit 10. In this example, the catalyst 20 is disposed between the first exhaust pipe 21 and the second exhaust pipe 22 and is disposed upstream of the silencer 25 in a flow direction of an exhaust gas. Accordingly, the distance between the catalyst 20 and the exhaust port 14 is relatively short, and an exhaust gas at start-up can be sufficiently purified by the catalyst 20. The first oxygen sensor 40 is attached to a portion of the first exhaust pipe 21 closer to the catalyst 20 than the intermediate position 21m of the first exhaust pipe 21. Thus, the distance between the first oxygen sensor 40 and the catalyst 20 is short, and an oxygen concentration of an exhaust gas near the catalyst 20 can be accurately detected.

Since the first oxygen sensor 40 is disposed rearward of the front wheel 35 as illustrated in FIG. 1, stone chips thrown by the front wheel 35 might hit the first oxygen sensor 40. In the scooter 1, however, the first oxygen sensor 40 is disposed rearward of the pivot shaft 6 and rearward of the cylinder body 12 (see FIG. 2). Since the first oxygen sensor 40 is located away from the front wheel 35 as described above, an influence of stone chips can be reduced. In acceleration, the amount of stone chips from the front wheel 35 might increase, but the first oxygen sensor 40 is located rearward of the pivot shaft 6 supporting the swing type engine unit 10 as described above. Since the engine unit 10 swings upward in acceleration, the first oxygen sensor 40 moves upward. Thus, even in acceleration, the influence of stone chips on the first oxygen sensor 40 can be reduced. As illustrated in FIG. 8, a portion of the first oxygen sensor 40 located outside the first exhaust pipe 21 (i.e., the body portion 42) is disposed above a lower end 21e of the first exhaust pipe 21 (see FIG. 1). Thus, stone chips are less likely to hit the first oxygen sensor 40. In addition, as illustrated in FIGS. 9A and 9B, the first oxygen sensor 40 and the under cover 5 overlap each other in the vehicle front view. The front of the first oxygen sensor 40 is covered with the under cover 5. Thus, the under cover 5 can prevent stone chips from hitting the first oxygen sensor 40. As illustrated in FIG. 3, since the first oxygen sensor 40 does not overlap the under cover 5 in the vehicle bottom view, maintenance of the first oxygen sensor 40 can be easily performed.

In the manner described above, since stone chips are less likely to hit the first oxygen sensor 40 in this preferred embodiment, it is unnecessary to dispose a dedicated cover for protecting the first oxygen sensor 40 below the first oxygen sensor 40. Even if such a cover is to be provided, this cover needs to be disposed at a level higher than the lowest level of the scooter 1 from the ground, resulting in the necessity for disposing the engine unit 10, the foot board 4, and the seat 2 (see FIG. 1) at higher levels. Consequently, the size of the vehicle would increase. In particular, since the engine unit 10 is of a swing type, the engine unit 10 swings upward and downward upon acceleration or deceleration of the scooter 1 or with unevenness of the road surface. Accordingly, to keep the lowest level from the ground when the engine unit 10 swings downward, the cover needs to be disposed at a higher level, resulting in tendency to a larger vehicle size. On the other hand, this preferred embodiment eliminates the necessity for such a cover, and thus, the lowest level from the ground can be kept without an increase in the vehicle size. Accordingly, an increase in the vehicle size can be suppressed.

As described above, the scooter 1 according to this preferred embodiment including the swing type engine unit 10 and the catalyst 20 disposed below the engine unit 10 can accurately detect the oxygen concentration of an exhaust gas near the catalyst 20 by using the first oxygen sensor 40 and can hinder hitting of stone chips against the first oxygen sensor 40, and can suppress an increase in the vehicle size.

In this preferred embodiment, as illustrated in FIG. 8, in a cross section including the central line 40C of the first oxygen sensor 40 and perpendicular to the central line 21C of the first exhaust pipe 21, the body portion 42 located outside the first exhaust pipe 21 is disposed outward of the central line 21C of the first exhaust pipe 21 in the vehicle width direction and above the lower end 21d of the first exhaust pipe 21. The first oxygen sensor 40 is disposed at a place at which an operator can easily perform maintenance. Thus, maintenance of the first oxygen sensor 40 can be more easily performed.

In this preferred embodiment, as illustrated in FIG. 1, the first oxygen sensor 40 is exposed in the vehicle side view. Thus, maintenance of the first oxygen sensor 40 from a side can be easily performed.

In this preferred embodiment, as illustrated in FIG. 1, a portion of the electric wire 45 connected to the first oxygen sensor 40 is exposed in the vehicle side view. Thus, the electric wire 45 can be easily handled from a side. Accordingly, maintenance of the first oxygen sensor 40 can be easily performed.

In this preferred embodiment, as illustrated in FIG. 6, the first exhaust pipe 21 and the catalyst case 23 are connected to each other by the first pipe fitting 31, and the central line 311C of the first opening portion 311 of the first pipe fitting 31 and the central line 312C of the second opening portion 312 of the first pipe fitting 31 are shifted from each other. When an exhaust gas passes through the first pipe fitting 31, the flow direction of the exhaust gas curves. Since the flow direction of the exhaust gas is changed by the first pipe fitting 31, the exhaust gas is likely to be mixed before the catalyst case 23. Thus, the exhaust gas can be caused to uniformly contact the catalyst 20 inside the catalyst case 23. In this manner, the exhaust gas can be efficiently purified.

In this preferred embodiment, as illustrated in FIG. 3, the first oxygen sensor 40 overlaps the crankcase 11 in the vehicle bottom view. It is possible to prevent the first oxygen sensor 40 from projecting more outwardly than the crankcase 11 in the vehicle width direction so that an increase in the vehicle size can be suppressed.

In this preferred embodiment, the first exhaust pipe 21 includes the slant portion 21k extending rearward and outward in the vehicle width direction in the vehicle bottom view, and the first oxygen sensor 40 is attached to the slant portion 21k. Thus, the electric wire 45 connected to the first oxygen sensor 40 can be easily drawn outward in the vehicle width direction. Accordingly, the electric wire 45 can be easily routed, and maintenance of the first oxygen sensor 40 can be easily performed.

In this preferred embodiment, the catalyst 20 is located forward of the rear wheel 36. The rear wheel 36 is less likely to hinder placement of the catalyst 20. Accordingly, the catalyst 20 can be easily disposed.

Although one preferred embodiment of the present teaching has been described above, the present teaching is, of course, not limited to this preferred embodiment.

In the preferred embodiment, the transmission case 7 of the engine unit 10 is disposed at the left of the vehicle central line CL, and the catalyst 20 and the silencer 25 are disposed at the right of the vehicle central line CL. Alternatively, the transmission case 7 may be disposed at the right of the vehicle central line CL with the catalyst 20 and the silencer 25 being disposed at the left of the vehicle central line CL. In this case, the first oxygen sensor 40 is disposed at the left of the vehicle central line CL.

According to the invention, the first oxygen sensor 40 is exposed in the vehicle side view. In an example not according to the invention, the first oxygen sensor 40 may not be exposed in the vehicle side view. A side of the first oxygen sensor 40 may be entirely covered with, for example, the side cover 29. The first oxygen sensor 40 may not overlap the crankcase 11 in the vehicle bottom view. The first oxygen sensor 40 may be attached to a portion other than the slant portion 21k of the first exhaust pipe 21. The first exhaust pipe 21 may not include the slant portion 21k. The entire first oxygen sensor 40 may be disposed at the left of the left end 35L of the front wheel 35 or at the right of the right end 35R of the front wheel 35 in the vehicle bottom view.

In the preferred embodiment, a portion of the electric wire 45 connected to the first oxygen sensor 40 is exposed in the vehicle side view. Alternatively, the entire electric wire 45 may not be exposed in the vehicle side view. The entire electric wire 45 may be covered with, for example, the side cover 29.

The central line 311C of the first opening portion 311 of the first pipe fitting 31 and the central line 312C of the second opening portion 312 of the first pipe fitting 31 may coincide with each other. That is, the central line of the first pipe fitting 31 may be linear.

At least a portion of the catalyst 20 may be disposed rearward of the front end of the rear wheel 36. The entire first oxygen sensor 40 may be disposed below the lower end of the catalyst 20 or may be disposed above the upper end of the catalyst 20. At least a portion of the first oxygen sensor 40 may be disposed outward of the catalyst 20 in the vehicle width direction.

### DESCRIPTION OF REFERENCE CHARACTERS

1 scooter, 2 seat, 3 vehicle body frame, 4 foot board, 5 under cover, 6 pivot shaft, 10 engine unit, 11 crankcase, 12 cylinder body, 13 cylinder head, 14 exhaust port, 20 catalyst, 21 first exhaust pipe, 21C central line of first exhaust pipe, 21e lower end of first exhaust pipe, 21k slant portion, 22 second exhaust pipe, 23 catalyst case, 25 silencer, 31 first pipe fitting, 32 second pipe fitting, 35 front wheel, 35L left end of front wheel, 35R right end of front wheel, 36 rear wheel, 40 first oxygen sensor (oxygen sensor), 40C central line of first oxygen sensor, 41 sensor portion (portion inside first exhaust pipe), 42 body portion (portion outside first exhaust pipe), 45 first electric wire (electric wire), 311 first opening portion, 311C central line of first opening portion, 312 second opening portion, 312C central line of second opening portion, CL vehicle central line

## Claims

1. A scooter (1) comprising:
a vehicle body frame (3);
a front wheel (35);
a foot board (4) at least partially disposed rearward of the front wheel (35), the foot board (4) being supported by the vehicle body frame (3);
an under cover (5) at least partially disposed below the foot board (4) and rearward of the front wheel (35);
a pivot shaft (6) disposed on the vehicle body frame (3); and
an engine unit (10) at least partially disposed below the foot board (4), the engine unit (10) being swingably supported by the pivot shaft (6), wherein
the engine unit (10) has a crankcase (11), a cylinder body (12) connected to the crankcase (11), and an exhaust port (14) configured to emit exhaust gas, and
includes a cylinder head (13) connected to the cylinder body (12),
the scooter (1) includes
a first exhaust pipe (21) connected to the exhaust port (14) of the cylinder head (13),
a second exhaust pipe (22) disposed downstream of the first exhaust pipe (21) in a flow direction of an exhaust gas,
a catalyst (20) disposed between the first exhaust pipe (21) and the second exhaust pipe (22) and below the engine unit (10),
a silencer (25) connected to the second exhaust pipe (22) and disposed rearward of the second exhaust pipe (22), and
an oxygen sensor (40) attached to a portion of the first exhaust pipe (21) closer to the catalyst (20) than an intermediate position (21m) of the first exhaust pipe (21), and the oxygen sensor (40) including a portion (41) located inside the first exhaust pipe (21) and a portion (42) located outside the first exhaust pipe (21),
the portion (42) of the oxygen sensor (40) located outside the first exhaust pipe (21) is disposed above a lower end (21e) of the first exhaust pipe (21),
at least a portion of the catalyst (20) overlaps the engine unit (10) in a vehicle bottom view, the oxygen sensor (40) is disposed rearward of the pivot shaft (6) and rearward of the cylinder body (12), and
the oxygen sensor (40) and the under cover (5) do not overlap each other in a vehicle bottom view, and overlap each other in a vehicle front view, **characterized in that** the oxygen sensor (40) is exposed in a vehicle side view, and
the oxygen sensor (40) overlaps the crankcase (11) in a vehicle bottom view.

2. The scooter (1) according to claim 1, wherein in a cross section including a central line (40C) of the oxygen sensor (40) and perpendicular to a central line (21C) of the first exhaust pipe (21), the portion (42) of the oxygen sensor (40) located outside the first exhaust pipe (21) is disposed outward of the central line (21C) of the first exhaust pipe (21) in a vehicle width direction and above a lower end (21d) of the first exhaust pipe (21).

3. The scooter (1) according to any one of claims 1 to 2, comprising an electric wire (45) connected to the oxygen sensor (40), wherein
a portion of the electric wire (45) is exposed in a vehicle side view.

4. The scooter (1) according to any one of claims 1 to 3, comprising:
a catalyst case (23) accommodating the catalyst (20) therein; and
a first pipe fitting (31) having a first opening portion (311) connected to the first exhaust pipe (21) and a second opening portion (312) connected to the catalyst case (23) and disposed between the first exhaust pipe (21) and the catalyst case (23),
wherein
a central line (311C) of the first opening portion (311) and a central line (312C) of the second opening portion (312) are shifted from each other.

5. The scooter (1) according to any one of claims 1 to 4, wherein
the first exhaust pipe (21) has a slant portion (21k) extending rearward and outward in a vehicle width direction in a vehicle bottom view, and
the oxygen sensor (40) is attached to the slant portion (21k).

6. The scooter (1) according to any one of claims 1 to 5, wherein at least a portion of the oxygen sensor (40) is disposed at a right of a left end (35L) of the front wheel (35) and at a left of a right end (35R) of the front wheel (35) in a vehicle bottom view.

7. The scooter (1) according to any one of claims 1 to 6, comprising a rear wheel (36) disposed rearward of the crankcase (11), wherein
the catalyst (20) is disposed forward of the rear wheel (36).

8. The scooter (1) according to any one of claims 1 to 7, wherein at least a portion of the oxygen sensor (40) is disposed above a lower end (20b) of the catalyst (20) and below an upper end (20t) of the catalyst (20).

9. The scooter (1) according to any one of claims 1 to 8, wherein the oxygen sensor (40) is disposed inward of the catalyst (20) in a vehicle width direction.

## Patentansprüche

1. Ein Motor-Roller (1), der umfasst:
einem Fahrzeug-Körper-Rahmen (3);
ein Vorder-Rad (35);
ein Fuß-Brett (4), das zumindest teilweise hinter dem Vorder-Rad (35) angeordnet ist, das Fuß-Brett (4) ist von dem Fahrzeug-Körper-Rahmen (3) getragen;
eine untere Abdeckung (5), die zumindest teilweise unterhalb des Fuß-Bretts (4) und hinter dem Vorder-Rad (35) angeordnet ist;
eine Schwenk-Welle (6), die an dem Fahrzeug-Körper-Rahmen (3) angeordnet ist; und
eine Motor-Einheit (10), die zumindest teilweise unterhalb des Fuß-Bretts (4) angeordnet ist, die Motor-Einheit (10) ist schwenkbar an der Schwenk-Welle (6) gelagert, wobei
die Motor-Einheit (10) ein Kurbel-Gehäuse (11), einen Zylinder-Körper (12), der mit dem Kurbel-Gehäuse (11) verbunden ist, und einen Abgas-Anschluss (14), der zum Ausstoßen von Abgas konfiguriert ist, hat, und einen Zylinder-Kopf (13), der mit dem Kurbel-Gehäuse (11) verbunden ist, beinhaltet,
der Motor-Roller (1) beinhaltet
ein erstes Abgas-Rohr (21), das mit dem Abgas-Anschluss (14) des ZylinderKopfs (13) verbunden ist,
ein zweites Abgas-Rohr (22), das stromabwärts des ersten Abgas-Rohrs (21) in einer Strömungs-Richtung eines Abgases angeordnet ist,
einen Katalysator (20), der zwischen dem ersten Abgas-Rohr (21) und dem zweiten Abgas-Rohr (22) und unterhalb der Motor-Einheit (10) angeordnet ist,
einem Schall-Dämpfer (25), der mit dem zweiten Abgas-Rohr (22) verbunden und hinter dem zweiten Abgas-Rohr (22) angeordnet ist, und
einen Sauerstoff-Sensor (40), der an einem Abschnitt des ersten Abgas-Rohrs (21) näher am Katalysator (20) als an einer Zwischen-Position (21m) des ersten Abgas-Rohrs (21) angebracht ist, und der Sauerstoff-Sensor (40) einen Abschnitt (41), der sich innerhalb des ersten Abgas-Rohrs (21) befindet, und einen Abschnitt (42), der sich außerhalb des ersten Abgas-Rohrs (21) befindet, beinhaltet,
der Teil (42) des Sauerstoff-Sensors (40), der sich außerhalb des ersten Abgas-Rohrs (21) befindet, ist oberhalb eines unteren Endes (21e) des ersten Abgas-Rohrs (21) angeordnet,
zumindest ein Teil des Katalysators (20) die Motor-Einheit (10) in einer Fahrzeug-Boden-Ansicht überlappt, der Sauerstoff-Sensor (40) hinter der Schwenk-Welle (6) und hinter dem Zylinder-Körper (12) angeordnet ist, und
der Sauerstoff-Sensor (40) und die untere Abdeckung (5) sich in einer Fahrzeug-Boden-Ansicht nicht überlappen und sich in einer Fahrzeug-Front-Ansicht überlappen, **dadurch gekennzeichnet, dass**
der Sauerstoff-Sensor (40) in einer Fahrzeug-Seiten-Ansicht freiliegt, und
der Sauerstoff-Sensor (40) das Kurbel-Gehäuse (11) in einer Fahrzeug-Boden-Ansicht überlappt.

2. Der Motor-Roller (1) gemäß Anspruch 1, wobei in einem Querschnitt, der eine Mittel-Linie (40C) des Sauerstoff-Sensors (40) einschließt und senkrecht zu einer Mittel-Linie (21C) des ersten Abgas-Rohrs (21) verläuft, der außerhalb des ersten Abgas-Rohrs (21) befindliche Abschnitt (42) des Sauerstoff-Sensors (40) außerhalb der Mittel-Linie (21C) des ersten Abgas-Rohrs (21) in einer Fahrzeug-Breiten-Richtung und oberhalb eines unteren Endes (21d) des ersten Abgas-Rohrs (21) angeordnet ist.

3. Der Motor-Roller (1) gemäß einem der Ansprüche 1 bis 2, umfassend eine elektrische Leitung (45), der mit dem Sauerstoff-Sensor (40) verbunden ist, wobei ein Teil der elektrischen Leitung (45) in einer Fahrzeug-Seiten-Ansicht freiliegt.

4. Der Motor-Roller (1) gemäß irgendeinem der Ansprüche 1 bis 3, umfassend:
ein Katalysator-Gehäuse (23), in dem der Katalysator (20) untergebracht ist; und
ein erstes Rohr-Fitting (31) mit einem ersten Öffnungs-Abschnitt (311), der mit dem ersten Abgas-Rohr (21) verbunden ist, und einem zweiten Öffnungs-Abschnitt (312), der mit dem Katalysator-Gehäuse (23) verbunden und zwischen dem ersten Abgas-Rohr (21) und dem Katalysator-Gehäuse (23) angeordnet ist, wobei
eine Mittel-Linie (311C) des ersten Öffnungs-Abschnitts (311) und eine Mittel-Linie (312C) des zweiten Öffnungs-Abschnitts (312) gegeneinander versetzt sind.

5. Der Motor-Roller (1) gemäß irgendeinem der Ansprüche 1 bis 4, wobei
das erste Abgas-Rohr (21) einen schrägen Abschnitt (21k) hat, der sich in einer Fahrzeug-Breiten-Richtung in einer Fahrzeug-Boden-Ansicht nach hinten und außen erstreckt, und
der Sauerstoff-Sensor (40) ist an dem schrägen Abschnitt (21k) befestigt.

6. Der Motor-Roller (1) gemäß irgendeinem der Ansprüche 1 bis 5, wobei zumindest ein Abschnitt des Sauerstoff-Sensors (40) in einer Fahrzeug-Boden-Ansicht rechts von einem linken Ende (35L) des Vorder-Rades (35) und links von einem rechten Ende (35R) des Vorder-Rades (35) angeordnet ist.

7. Der Motor-Roller (1) gemäß irgendeinem der Ansprüche 1 bis 6, der ein Hinter-Rad (36) umfasst, das hinter dem Kurbel-Gehäuse (11) angeordnet ist, wobei der Katalysator (20) ist vor dem Hinter-Rad (36) angeordnet.

8. Der Motor-Roller (1) gemäß irgendeinem der Ansprüche 1 bis 7, wobei zumindest ein Abschnitt des Sauerstoff-Sensors (40) oberhalb eines unteren Endes (20b) des Katalysators (20) und unterhalb eines oberen Endes (20t) des Katalysators (20) angeordnet ist.

9. Der Motor-Roller (1) gemäß irgendeinem der Ansprüche 1 bis 8, wobei der Sauerstoff-Sensor (40) in einer Fahrzeug-Breiten-Richtung einwärts von dem Katalysator (20) angeordnet ist.

## Revendications

1. Scooter (1) comprenant :
un châssis de carrosserie (3) de véhicule ;
une roue avant (35) ;
un repose-pied (4) au moins en partie disposé en arrière de la roue avant (35), le repose-pied (4) étant supporté par le châssis de carrosserie (3) de véhicule ;
un capot inférieur (5) au moins en partie disposé sous le repose-pied (4) et en arrière de la roue avant (35) ;
un arbre pivot (6) disposé sur le châssis de carrosserie (3) de véhicule ; et
un bloc moteur (10) au moins en partie disposé sous le repose-pied (4), le bloc moteur (10) étant supporté de manière oscillante par l'arbre pivot (6), dans lequel
le bloc moteur (10) comprend un vilebrequin (11), un corps de cylindre (12) relié au vilebrequin (11), et un orifice d'échappement (14) configuré pour évacuer un gaz d'échappement, et comprend une culasse (13) reliée au corps de cylindre (12),
le scooter (1) comprend
un premier tuyau d'échappement (21) connecté à l'orifice d'échappement (14) de la culasse (13),
un second tuyau d'échappement (22) disposé en aval du premier tuyau d'échappement (21) dans une direction d'écoulement d'un gaz d'échappement,
un catalyseur (20) disposé entre le premier tuyau d'échappement (21) et le second tuyau d'échappement (22) et sous le bloc moteur (10),
un silencieux (25) connecté au second tuyau d'échappement (22) et disposé en arrière du second tuyau d'échappement (22), et
un capteur d'oxygène (40) fixé à une partie du premier tuyau d'échappement (21) plus proche du catalyseur (20) qu'une position intermédiaire (21m) du premier tuyau d'échappement (21), et le capteur d'oxygène (40) comprenant une partie (41) située à l'intérieur du premier tuyau d'échappement (21) et une partie (42) située à l'extérieur du premier tuyau d'échappement (21), la partie (42) du capteur d'oxygène (40) située à l'extérieur du premier tuyau d'échappement (21) est disposée au-dessus d'une extrémité inférieure (21e) du premier tuyau d'échappement (21),
au moins une partie du catalyseur (20) chevauche le bloc moteur (10) en vue de dessous du véhicule, le capteur d'oxygène (40) est disposé en arrière de l'arbre pivot (6) et en arrière du corps de cylindre (12), et
le capteur d'oxygène (40) et le capot inférieur (5) ne se chevauchent pas mutuellement en vue de dessous du véhicule, et se chevauchent mutuellement en vue avant du véhicule, **caractérisé en ce que**
le capteur d'oxygène (40) est exposé en vue latérale du véhicule, et
le capteur d'oxygène (40) chevauche le vilebrequin (11) en vue de dessous du véhicule.

2. Scooter (1) selon la revendication 1, dans lequel, en section transversale incluant un axe (40C) du capteur d'oxygène (40) et perpendiculaire à un axe (21C) du premier tuyau d'échappement (21), la partie (42) du capteur d'oxygène (40) située à l'extérieur du premier tuyau d'échappement (21) est disposée à l'extérieur de l'axe (21C) du premier tuyau d'échappement (21) dans un sens de la largeur du véhicule et au-dessus d'une extrémité inférieure (21d) du premier tuyau d'échappement (21).

3. Scooter (1) selon l'une quelconque des revendications 1 à 2, comprenant un fil électrique (45) connecté au capteur d'oxygène (40), dans lequel
une partie du fil électrique (45) est exposée en vue latérale du véhicule.

4. Scooter (1) selon l'une quelconque des revendications 1 à 3, comprenant :
un boîtier de catalyseur (23) dans lequel le catalyseur est logé (20) ; et
un premier raccord de tuyau (31) présentant une première partie d'ouverture (311) connectée au premier tuyau d'échappement (21) et une seconde partie d'ouverture (312) connectée au boîtier de catalyseur (23), et disposé entre le premier tuyau d'échappement (21) et le boîtier de catalyseur (23), dans lequel
un axe (311C) de la première partie d'ouverture (311) et un axe (312C) de la seconde partie d'ouverture (312) ne coïncident pas.

5. Scooter (1) selon l'une quelconque des revendications 1 à 4, dans lequel
le premier tuyau d'échappement (21) comprend une partie oblique (21k) s'étendant vers l'arrière et vers l'extérieur dans un sens de la largeur du véhicule en vue de dessous du véhicule, et
le capteur d'oxygène (40) est fixé sur la partie oblique (21k).

6. Scooter (1) selon l'une quelconque des revendications 1 à 5, dans lequel au moins une partie du capteur d'oxygène (40) est disposée à droite d'une extrémité gauche (35L) de la roue avant (35) et à gauche d'une extrémité droite (35R) de la voix avant (35) en vue de dessous du véhicule.

7. Scooter (1) selon l'une quelconque des revendications 1 à 6, comprenant une roue arrière (36) disposée en arrière du vilebrequin (11), dans lequel
le catalyseur (20) est disposé en avant de la roue arrière (36).

8. Scooter (1) selon l'une quelconque des revendications 1 à 7, dans lequel au moins une partie du capteur d'oxygène (40) est disposée au-dessus d'une extrémité inférieure (20b) du catalyseur (20) et en-dessous d'une extrémité supérieure (20t) du catalyseur (20).

9. Scooter (1) selon l'une quelconque des revendications 1 à 8, dans lequel le capteur d'oxygène (40) est disposé sur l'intérieur du catalyseur (20) dans un sens de la largeur du véhicule.
